# EUROPEAN PATENT APPLICATION

(11) **EP 4 685 932 A1**
(43) Date of publication of application: **28.01.2026**
(21) Application number: 24860474.6
(22) Date of filing: 30.08.2024
(51) Int. Cl.: H01M 10/658, H01M 10/6551, H01M 50/271, H01M 50/358, H01M 10/647, H01M 50/211, H01M 50/249

(54) **BATTERY MODULE CONFIGURED TO PREVENT THERMAL PROPAGATION BETWEEN CELL BANKS**

(30) Priority: 01.09.2023 KR 20230116146
(71) Applicant: LG Energy Solution, Ltd., Seoul 07335 (KR)
(72) Inventor: CHOI, Wansup, Daejeon 34122 (KR); JUNG, Kitaek, Daejeon 34122 (KR)
(74) Representative: BCKIP Part mbB
(86) International application number: PCT/KR2024/013079
(87) International publication number: WO 2025/048558

(57) **Abstract**

The present invention provides A battery module including: a cell laminate wherein a plurality of pouch-type battery cells are laminated in widthwise direction; a frame accommodating the cell laminate with an open upper end; and a top plate covering the upper end of the frame, wherein an upper surface of the cell laminate is coated with a resin layer having an upper surface in contact with the top plate. The resin layer may extend in horizontal direction, and the resin layer may divide, in horizontal direction, a space between the cell laminate and the top plate into a plurality of spaces.

## Description

### [TECHNICAL FIELD]

This application claims the benefit of priority based on Korean Patent Application No. 10-2023-0116146 filed on September 1, 2023, entire content disclosed in the document of the patent applications is included as a part of this specification.

The present invention relates to a structure of a battery module that incorporates a laminate of a plurality of pouch-type battery cells, in which thermal propagation between battery cells is prevented.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

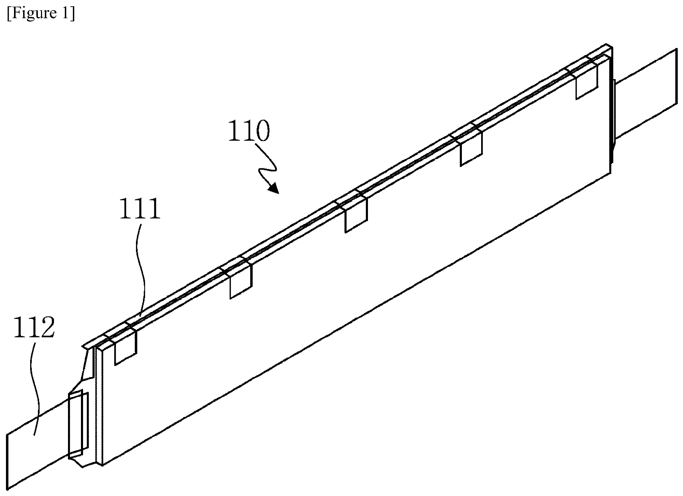

FIG. 1 illustrates a structure of a pouch-type battery cell. Referring to FIG. 1, a general pouch-type battery cell 110 is formed by fusing and sealing a sheet folded in half to form a metal material pouch accommodating an electrode assembly provided with a sealed portion 111 provided at the upper portion thereof and a terrace portion provided at two lengthwise ends thereof. A pair of electrode leads 112 that connect the electrode assembly to the outside protrude through the terrace portion.

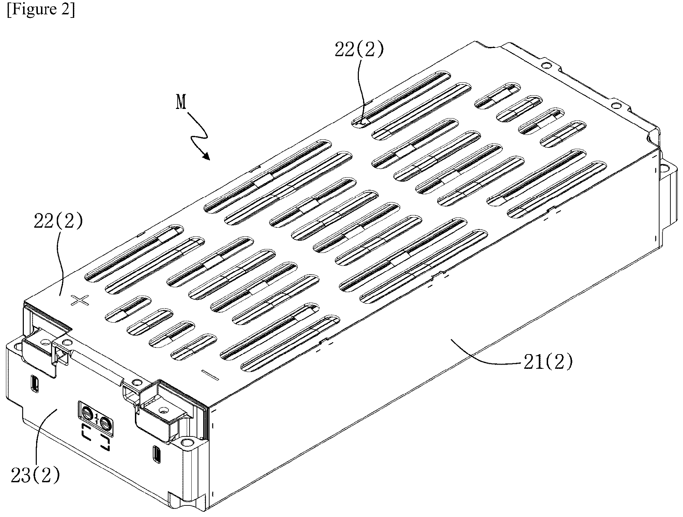

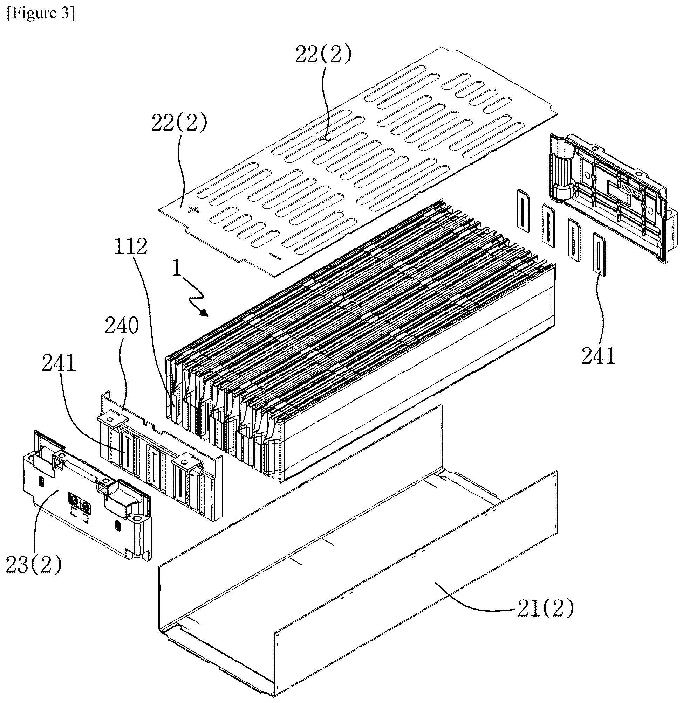

FIGS. 2 and 3 illustrate a structure of a general battery module. Referring to FIGS. 2 and 3, a general battery module M includes a cell laminate 1 wherein a plurality of battery cells 110 are laminated in widthwise direction, and a housing 2 accommodating the same. The housing 2 generally includes a frame 21 having open upper end and a top plate 22 covering the open upper end of the frame 21. Here, due to reasons such as assembly tolerance, an empty space exists between the cell laminate 1 and the top plate 22.

Meanwhile, the battery cell 110 may ignite due to reasons such as a short circuit or shock. When the battery cell 110 ignites, high-temperature gas and flame are discharged from the battery cell 110. These high-temperature gas and flame are mainly discharged through the sealed portion 111 that is fused and sealed.

When a battery cell ignites, the high-temperature gas and flame discharged through the sealed portion 111 may diffuse through the space between the cell laminate 1 and the top plate 22 such that heat may be transmitted to other battery cells that have not ignited. Such thermal propagation between cells may cause a serial ignition, which may result in thermal runaway of at the module level.

In addition, a plurality of battery modules M may be integrated to form a battery pack. In the battery pack, the battery modules M are generally connected to each other at the front and rear portions where the electrode leads 112 are provided. Therefore, when the battery cell 110 ignites, the high-temperature gas and flame discharged through the front and rear portions may cause thermal runaway at the pack level by thermal propagation between modules.

Therefore, when the battery cell 110 ignites, a structure of a battery module capable of preventing thermal propagation between cells caused by the high-temperature gas and flame discharged upward and thermal propagation between modules caused by the high-temperature gas and flame discharged through the front and rear portions is necessary.

### [DISCLOSURE]

### [TECHNICAL PROBLEM]

In order to solve above-described problems of the prior art, it is an object of the present invention to provide a structure of a battery module capable of preventing thermal propagation between cells and thermal propagation between modules caused by gas and flame.

Specifically, it is an object of the present invention to provide a structure of a battery module wherein gas and flame discharge paths are divided for each cell bank.

In addition, it is an object of the present invention to provide a structure of a battery module wherein gas and flame caused by ignition are prevented from being discharged to the front and rear portions of a module provided with electrode leads and terminals.

The present invention is also advantageous in that the structure of a battery module is provided in which the movement of cell laminate in a housing is prevented and the heat generated from the cell laminate may be dissipated to the outside of the housing.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides A battery module including: a cell laminate wherein a plurality of pouch-type battery cells are laminated in widthwise direction; a frame accommodating the cell laminate with an open upper end; and a top plate covering the upper end of the frame, wherein an upper surface of the cell laminate is coated with a resin layer having an upper surface in contact with the top plate.

The resin layer may include a thermally conductive material. Accordingly, the resin layer may conduct heat generated from the cell laminate to the top plate and dissipate the same to the outside of the battery module.

The resin layer may include a heat-resistant or fire-resistant material. Accordingly, the resin layer may not melt or deform even when exposed to high-temperature gas and flame.

The resin layer may extend in horizontal direction. As a result, the resin layer may divide, in horizontal direction, a space between the cell laminate and the top plate into a plurality of spaces. That is, the resin layer may delay or block the flow of gas or flame between any two points of the space between the cell laminate and the top plate.

The resin layer may include a first resin layer coated on the upper surface of the cell laminate and extending in lengthwise direction. Here, the first resin layer may divide, in widthwise direction, the space between the cell laminate and the top plate into a plurality of spaces.

The cell laminate may include a plurality of cell banks isolated in widthwise direction by a barrier member laminated together with the battery cells wherein each of the plurality of cell banks including the plurality of battery cells. Here, the first resin layer may extend in a lengthwise direction along an upper end portion of the barrier member, and the first resin layer may divide, in widthwise direction, the space between the cell laminate and the top plate into a plurality of spaces corresponding to the cell banks. That is, each cell bank may have an independent venting space isolated by the barrier member and the first resin layer. Accordingly, thermal propagation between cell banks may be prevented, and thermal runaway at the module level may be prevented.

The top plate may include a plurality of venting holes. The first resin layer may be provided at a location where the venting holes are not provided. In such case, gas and flame discharged from one battery cell may not be transmitted to other cell banks other than the cell bank including the battery cell, but may be discharged directly upward through the venting hole. The gas and flame generated from an ignited battery cell may be discharged directly upward through the venting holes while being prevented from being transmitted to cell banks other than the one including the ignited battery cell.

The resin layer may include a second resin layer coated on the upper surface of the cell laminate and extending in widthwise direction. Here, the second resin layer may divide, in lengthwise direction, the space between the cell laminate and the top plate into a plurality of spaces.

A sealed portion protruding upward and extending in lengthwise direction may be provided at an upper end portion of each of the plurality of pouch-type battery cells. Gas and flame emitted from the battery cell may be mainly discharged upward through the sealed portion. Here, the second resin layer may extend in widthwise direction at a position corresponding to one lengthwise end of the sealed portion, and the second resin layer may planarly divide the space between the cell laminate and the top plate into a space with the sealed portion and a space without the sealed portion.

Preferably, the second resin layer may extend in widthwise direction at positions corresponding to two lengthwise ends of the sealed portion, respectively, and the second resin layer may planarly divide the space between the cell laminate and the top plate into a space with the sealed portion and a space without the sealed portion.

The height of the second resin layer may be equal to or greater than the distance between the top plate and a front end of the sealed portion. Preferably, the height of the second resin layer is equal to or greater than the distance between the top plate and the base end of the sealed portion. As a result, high-temperature gas and flame discharged through the sealed portion may not be discharged in forward and backward directions in the space between the cell laminate and the top plate, and thermal propagation to other battery modules adjacent to the battery module in the front and rear may be prevented.

The top plate may include a plurality of venting holes, and the second resin layer may be provided at a location where the venting holes are not provided.

The second resin layer may extend in widthwise direction on a portion of the upper surface of the cell laminate outer than a lengthwise end of an area of the top plate where venting hole is provided, and the second resin layer may planarly divide the space between the cell laminate and the top plate into a space with the venting hole and a space without the venting hole.

Preferably, the second resin layer may extend in widthwise direction on a portion of the upper surface of the cell laminate outer than two lengthwise ends of an area of the top plate where venting hole is provided, and the second resin layer may planarly divide the space between the cell laminate and the top plate into a space with the venting hole and a space without the venting hole. In such case, the gas and flame emitted from the battery cell may be discharged directly upward without being transmitted to front and rear portions.

The present invention also provides structures of a battery pack including the battery module and a vehicle including the battery pack. The battery pack may be constituted by integrating a plurality of battery modules by arranging the same adjacent to each other in the forward and backward directions and connecting the same in series and/or in parallel.

The battery pack may include a pack frame that accommodates the battery modules. The pack frame may be equipped with a venting device that is capable of discharging high-temperature gas and flame emitted upward from the battery module.

The battery pack may be installed in a vehicle as a power source. The vehicle may be a hybrid vehicle or an electric vehicle.

### [ADVANTAGEOUS EFFECTS]

The present invention provides a structure of a battery module wherein the space between the cell laminate and the top plate is divided for each cell bank by a resin layer such that the discharge paths of gas and flame are isolated for cell bank, thereby preventing thermal runaway caused by thermal propagation between cells at the module level.

The present invention provides a structure of a battery module wherein thermal propagation between modules is prevented by the resin layer such that high-temperature gas and flame are prevented from being discharged to the front and rear portions of the cell laminate.

The present invention is also advantageous in that the movement of cell laminate is prevented and the heat generated from the cell laminate may be dissipated to the outside due to the cell laminate being connected to the top plate by a resin layer having thermal conductivity.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIGS. 2 and 3 illustrate a structure of a general battery module.
FIGS. 4 and 5 illustrate a structure of a battery module according to an embodiment of the present invention.
FIG. 6 illustrates a structure of a cell laminate according to an embodiment of the present invention.
FIG. 7 illustrates a cross-section of the battery module of FIG. 4.
FIG. 8 illustrates the cell laminate of FIG. 6 viewed from one lengthwise side thereof.
FIG. 9 illustrates a cross-section of the battery module of FIG. 4.

### [DESCRIPTION OF REFERENCE NUMERALS]

1: cell laminate
   11: cell bank
   110: battery cell
      111: sealed portion
      112: electrode lead
   12: barrier member
   13: resin layer
      131: first resin layer
      132: second resin layer
2: housing
   21: frame
   22: top plate
      220: venting hole
   23: end plate
   240: bus bar frame
   241: bus bar
M: battery module
H1: height of second resin layer
H2: distance between top plate and front end of sealed portion
H3: distance between top plate and base end of sealed portion

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Expressions related to directions such as forward and rear directions, left and right directions, upward and downward directions, lengthwise direction, widthwise direction and heightwise direction are included herein for convenience of description. However, these directions are not necessarily considered to be orthogonal to each other or related to a specific direction such as the direction of gravity, and may be appropriately selected to intersect or be parallel to each other as long as the technical solution of the present invention is maintained.

Hereinafter, a preferred embodiment of the present invention will be described with reference to the accompanying drawings.

FIG. 1 illustrates a structure of a pouch-type battery cell. Referring to FIG. 1, the battery cell 110 may include an electrode assembly and a pouch accommodating the electrode assembly.

The electrode assembly is accommodated in the pouch formed by folding a sheet in half and sealed at the sealed portion 111.

The sealing may be achieved by fusion. Here, the sealed portion 111 may be additionally sealed by folding or attaching a tape after fusing and sealing.

The battery cell 110 may include an electrode lead 112 that extends from the electrode assembly and protrudes outward from the pouch.

Meanwhile, the battery cell 110 may ignite by shock, short circuit, heating, etc. When the battery cell 110 ignites, high-temperature gas and flame generated from the electrode assembly may be discharged from the pouch. Here, the gas and flame may be discharged upward from the battery cell 110 through the sealed portion 111 as the fusion portion of the sealed portion 111 is melted.

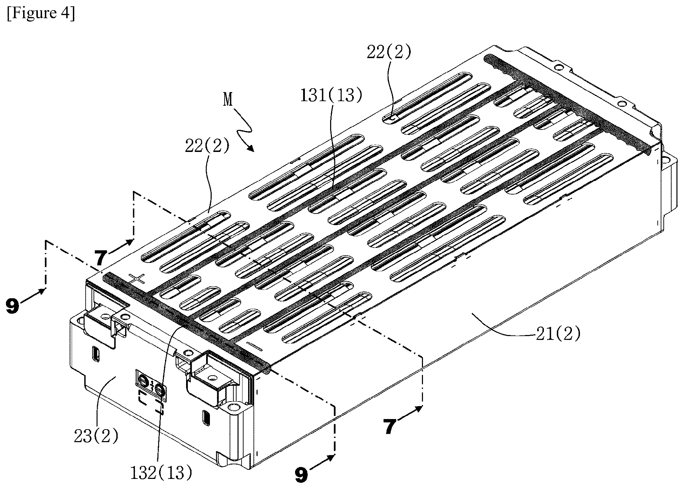

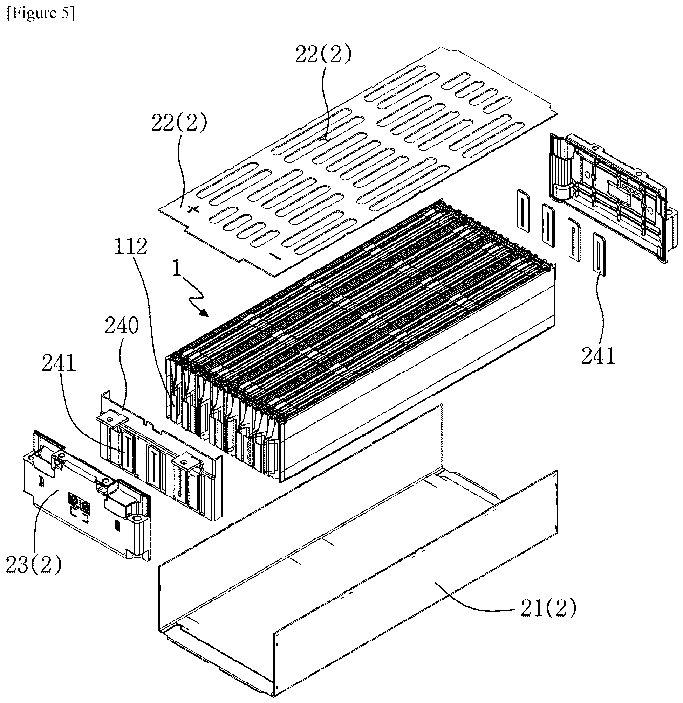

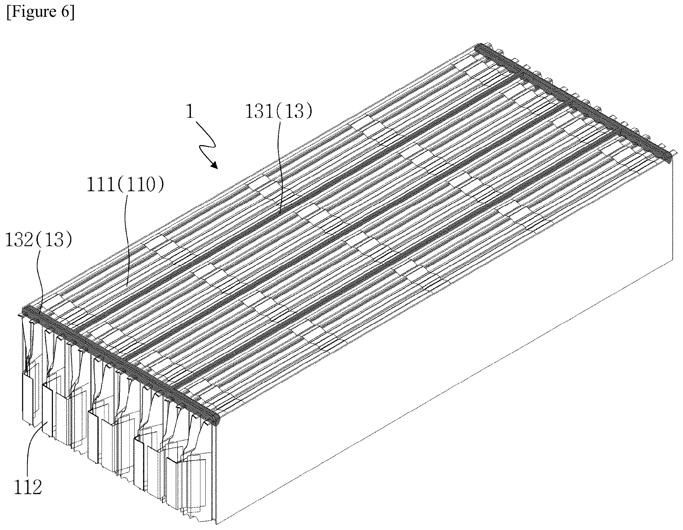

FIGS. 4 and 5 illustrate a structure of a battery module according to an embodiment of the present invention, and FIG. 6 illustrates a structure of a cell laminate according to an embodiment of the present invention. Referring to FIGS. 4, 5 and 6, a battery module M according to an embodiment of the present invention may include a cell laminate 1 and a housing 2 accommodating the cell laminate 1.

The cell laminate 1 may be formed by stacking a plurality of battery cells 110 in widthwise direction.

Here, the electrode lead 112 may protrude outward from the two lengthwise ends of the cell laminate 1, and the sealed portion 111 may face upward. When any one of the battery cells 110 included in the cell laminate 1 ignites, gas and flame may be discharged upward due to the sealed portion 111 facing upward.

A resin layer 13 may be coated on the upper surface of the cell laminate 1. The resin layer 13 may include a curing synthetic resin that hardens over time after coating. The resin layer 13 may include a thermally conductive material. The resin layer 13 may include a heat-resistant or fire-resistant material.

The housing 2 may include a frame 21 having an open upper end and a top plate 22 covering the open upper end of the frame 21. The top plate 22 may include a plurality of venting holes 220 provided at the top plate 22 for discharging gas and flame from the sealed portion 111 in upward direction toward the outside of the housing 2 when the battery cell 110 ignites.

The frame 21 may have open front and rear ends. Here, the housing 2 may include a pair of end plates 23 covering the open front and rear ends of the frame 21.

The upper surface of the resin layer 13 may be in contact with the top plate 22. That is, the resin layer 13 may vertically connect the upper surface of the cell laminate 1 and the bottom surface of the top plate 22.

When the top plate 22 includes the venting holes 220, the resin layer 13 may be in contact with the top plate 22 at a portion thereof where the venting hole 220 is not provided.

When the resin layer 13 includes a thermally conductive material, the resin layer 13 may provide a heat dissipation function such that the heat generated from the cell laminate 1 is conducted to the top plate 22 and released to the outside.

When the resin layer 13 includes a heat-resistant or fire-resistant material, the resin layer 13 may maintain the structure thereof without being melted or burned by high-temperature gas and flame even when the cell laminate 1 ignites.

The resin layer 13 may be extended in the horizontal direction. In such case, the space between the cell laminate 1 and the top plate 22 may be divided into a plurality of spaces in the horizontal direction. That is, the resin layer 13 may delay or block the flow of gas or flame between any two points of the space between the cell laminate 1 and the top plate 22.

The resin layer 13 may include a first resin layer 131 extending in lengthwise direction. The first resin layer 131 may divide, in widthwise direction, the space between the cell laminate 1 and the top plate 22 into a plurality of spaces.

The resin layer 13 may include a second resin layer 132 extending in widthwise direction. The second resin layer 132 may divide, in lengthwise direction, the space between the cell laminate 1 and the top plate 22 into a plurality of spaces.

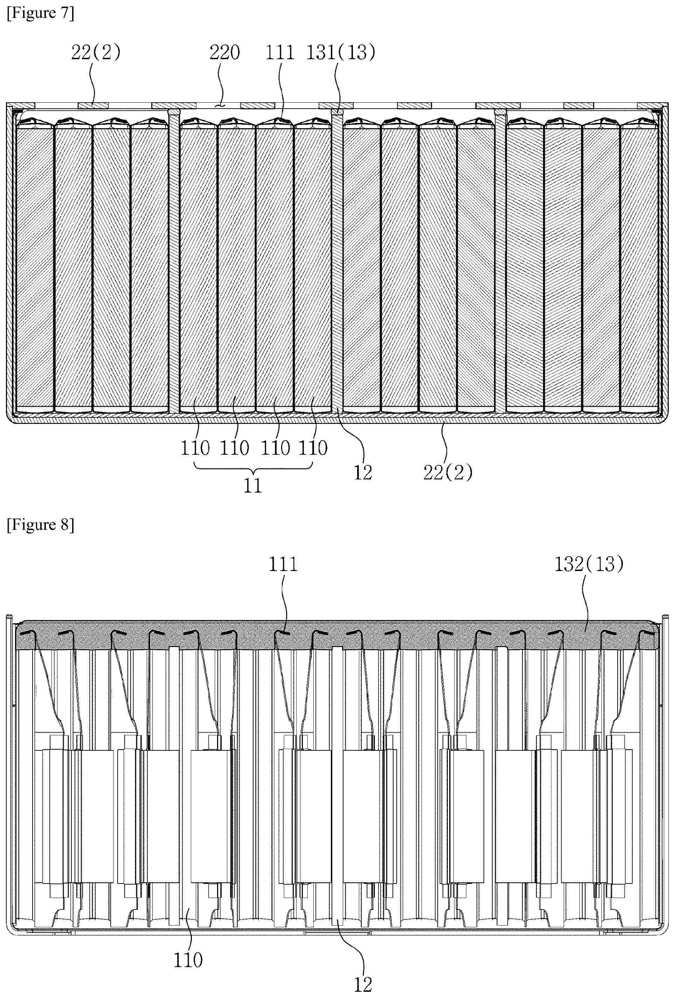

FIG. 7 illustrates a cross-section of the battery module of FIG. 4. Referring to FIG. 7, the cell laminate 1 may include a barrier member 12 laminated together with the battery cells 110. The battery cell 110 may constitute a plurality of cell banks isolated from each other by the barrier member 12. That is, the cell laminate 1 may be manufactured by laminating a plurality of cell banks stacked in the widthwise direction with the barrier member 12 interposed therebetween wherein each cell bank includes a plurality of battery cells 110.

The first resin layer 131 may extend in lengthwise direction along the upper end portion of the barrier member 12. Here, the first resin layer 131 may divide, in the widthwise direction, the space between the cell laminate 1 and the top plate 22 into a plurality of spaces corresponding to the cell banks 11, respectively.

According to an embodiment of the present invention, the second resin layer 132 prevents the high-temperature gas and flame generated from a ignited battery cell 110 from being transmitted to other cell banks adjacent to the cell bank 11 to which the ignited battery cell 110 belongs through the space between the cell laminate 1 and the top plate 22. That is, the present invention according to an embodiment provides a structure of the battery module wherein the venting path of the gas and flame is divided for each cell bank such that the ignition of one cell bank does not lead to the ignition of other cell banks and the thermal runaway at the module level.

FIG. 8 illustrates the cell laminate of FIG. 6 viewed from one lengthwise side thereof. Referring to FIG. 8, the second resin layer 132 may extend in widthwise direction at a position corresponding to one lengthwise end of the sealed portion 111. The one lengthwise end of the sealed portion 111 is one extending end thereof, which may be one end of the upper end portion of the battery cell 110, or one end of a section having a portion where the electrode assembly is provided as a base end in the upper end portion. That is, the one lengthwise end of the sealed portion 111 may be a portion spaced apart in lengthwise direction by a predetermined section inner than the upper end portion of the battery cell 110.

Referring back to FIG. 6, the second resin layer 132 according to an embodiment of the present invention may be provided as a pair extending in widthwise direction at a position corresponding to two lengthwise ends of the sealed portion 111. Here, the second resin layer 132 may planarly divide the space between the cell laminate 1 and the top plate into a space with the sealed portion 111 and a space without the sealed portion 111.

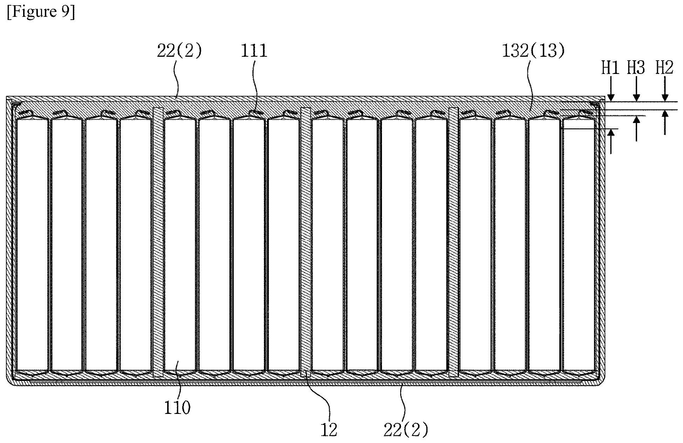

FIG. 9 illustrates a cross-section of the battery module of FIG. 4. Referring to FIG. 9, the height H1 of the second resin layer 132 may be equal to or greater than the distance H2 between the top plate 22 and the front end of the sealed portion 111. Preferably, the height H1 of the second resin layer 132 may be equal to or greater than the distance H3 between the top plate 22 and the base end of the sealed portion 111. Accordingly, the second resin layer 132 may prevent gas and flame discharged through the sealed portion 111 from being discharged outward in the lengthwise direction in the space between the top plate 22 and the cell laminate 1. As a result, thermal propagation between modules and thermal runaway at pack level due to gas and flame discharged through the front and rear portions of the battery module M may be prevented.

The present invention also provides structures of a battery pack including the battery module and a vehicle including the battery pack. The battery pack may be constituted by integrating a plurality of battery modules by arranging the same adjacent to each other in the forward and backward directions and connecting the same in series and/or in parallel.

The battery pack may include a pack frame that accommodates the battery modules. The pack frame may be equipped with a venting device that is capable of discharging high-temperature gas and flame emitted upward from the battery module.

According to an embodiment of the present invention, since the discharge of gas and flame toward the front and rear portions of the battery module is prevented, thermal propagation between modules is prevented, and thermal runaway of the entire battery pack may be prevented.

The battery pack may be built into a vehicle as a power source. The vehicle may be a hybrid vehicle or an electric vehicle. Since the thermal runaway of the battery pack is prevented, casualties of the passengers of the vehicle due to an explosion of the battery pack may be prevented.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a cell laminate wherein a plurality of pouch-type battery cells are laminated in widthwise direction;
a frame accommodating the cell laminate with an open upper end; and
a top plate covering the upper end of the frame and provided with a plurality of venting holes,
wherein an upper surface of the cell laminate is coated with a heat-resistant or fire-resistant resin layer, and
the resin layer extends under a portion of the top plate without the plurality of venting holes and an upper surface of the resin layer is in contact with the top plate such that the resin layer divides a space between the cell laminate and the top plate into a plurality of spaces.

2. The battery module of claim 1, wherein the resin layer comprises a thermally conductive material.

3. The battery module of claim 1, wherein the resin layer extends in horizontal direction.

4. The battery module of claim 3, wherein the resin layer comprises a first resin layer coated on the upper surface of the cell laminate and extending in lengthwise direction, the first resin layer dividing, in widthwise direction, the space between the cell laminate and the top plate into

5. The battery module of claim 4, wherein the cell laminate comprises a plurality of cell banks isolated in widthwise direction by a barrier member laminated together with the battery cells, each of the plurality of cell banks comprising the plurality of battery cells, and
the first resin layer extends in a lengthwise direction along an upper end portion of the barrier member, the first resin layer dividing, in widthwise direction, the space between the cell laminate and the top plate into a plurality of spaces corresponding to the cell banks.

6. The battery module of claim 3, wherein the resin layer comprises a second resin layer coated on the upper surface of the cell laminate and extending in widthwise direction, the second resin layer dividing, in lengthwise direction, the space between the cell laminate and the top plate into a plurality of spaces.

7. The battery module of claim 6, wherein a sealed portion protruding upward and extending in lengthwise direction is provided at an upper end portion of each of the plurality of pouch-type battery cells,
the second resin layer extends in widthwise direction at a position corresponding to one lengthwise end of the sealed portion, and
the second resin layer planarly divides the space between the cell laminate and the top plate into a space with the sealed portion and a space without the sealed portion.

8. The battery module of claim 7, wherein the second resin layer extends in widthwise direction at positions corresponding to two lengthwise ends of the sealed portion, respectively, and
the second resin layer planarly divides the space between the cell laminate and the top plate into a space with the sealed portion and a space without the sealed portion.

9. The battery module of claim 7, wherein a height of the second resin layer is equal to or greater than a distance between the top plate and a front end of the sealed portion.

10. The battery module of claim 9, wherein the height of the second resin layer is equal to or greater than the distance between the top plate and the base end of the sealed portion.

11. The battery module of claim 6, wherein the second resin layer extends in widthwise direction on a portion of the upper surface of the cell laminate outer than a lengthwise end of an area of the top plate where venting hole is provided, and
the second resin layer planarly divides the space between the cell laminate and the top plate into a space with the venting hole and a space without the venting hole.

12. The battery module of claim 6, wherein the second resin layer extends in widthwise direction on a portion of the upper surface of the cell laminate outer than two lengthwise ends of an area of the top plate where venting hole is provided, and
the second resin layer planarly divides the space between the cell laminate and the top plate into a space with the venting hole and a space without the venting hole.
